# FASCICULE DE BREVET EUROPEEN

(11) **EP 2 881 290 B1**
(45) Date de publication et mention de la délivrance du brevet: **16.11.2016**
(21) Numéro de dépôt: 14194843.0
(22) Date de dépôt: 26.11.2014
(51) Int. Cl.: B60S 1/38, B60S 1/52

(54) **Dispositif chauffant pour balai d'essuie-glace d'un véhicule et balai d'essuie-glace le comportant**
Heizvorrichtung für Scheibenwischerarm eines Fahrzeugs, und diese umfassender Scheibenwischerarm
Heating device for a windscreen-wiper blade and windscreen-wiper blade comprising same

(30) Priorité: 05.12.2013 FR 1362138
(43) Date de publication de la demande: 10.06.2015
(73) Titulaire: Valeo Systèmes d'Essuyage, 78321 Le Mesnil Saint Denis (FR)
(72) Inventeur: Caillot, Gérald, 78720 CERNAY LA VILLE (FR); Izabel, Vincent, 91380 CHILLY MAZARIN (FR); Jarasson, Jean-Michel, 78321 LE MESNIL SAINT DENIS (FR)
(74) Mandataire: Callu Danseux, Violaine

(56) Documents cités:
- DE-A1-102010 007 557
- DE-A1-102011 055 948
- US-A1- 2012 005 856
- US-A1- 2012 117 746

## Description

La présente invention concerne un dispositif chauffant pour balai d'essuie-glace d'un véhicule et un balai d'essuie-glace le comportant.

Un dispositif chauffant dans ce genre de balai d'essuie-glace comprend un élément chauffant intégré dans la structure du balai d'essuie-glace en s'étendant sur sensiblement toute la longueur de celui-ci. Grâce à la présence de cet élément chauffant, il est possible de faire fondre de la glace ou de la neige qui lors de la période froide peut se former ou s'agglutiner sur le balai d'essuie-glace, en particulier autour de la lame d'essuyage, et qui nuit alors à son bon fonctionnement. Cela peut être encore plus gênant lorsque le balai d'essuie-glace est pourvu d'au moins une rampe de distribution d'un liquide de lavage. En effet, le gel, en particulier au niveau des canaux et des trous de distribution, empêche le liquide de sortir, ce qui conduit à la perte de la fonction de lavage et peut d'une manière générale rendre l'ensemble du balai d'essuie-glace trop rigide.

Le dispositif chauffant du balai d'essuie-glace peut comprendre un ou plusieurs éléments (par exemple sous forme de fils) résistifs associés à un des éléments constitutifs du balai d'essuie-glace. Le ou les éléments résistifs s'étendent en général tout le long d'un de ces éléments constitutifs.

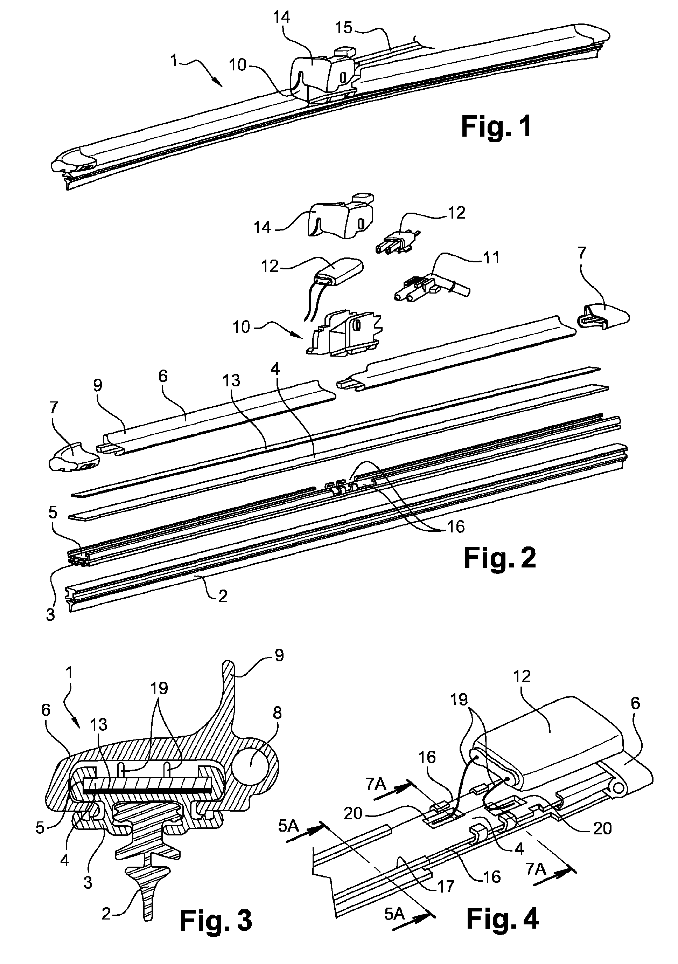

On connaît également un tel dispositif chauffant comprenant un film résistif incorporé dans le balai d'essuie-glace. La structure d'un tel balai d'essuie-glace connu est illustrée à l'aide de l'exemple montré sur les figures 1 et 2. Il s'agit d'un balai d'essuie-glace du type plat, souvent désigné comme un balai d'essuie-glace souple ou balai d'essuie-glace plat. Les figures 2 et 3 montrent, dans une vue éclatée et en coupe transversale respectivement, les éléments constitutifs du balai d'essuie-glace 1 qui comprennent, de bas en haut, une lame de raclage 2, en général en élastomère, fixée à un élément de support allongé 3, en général en un matériau plastique semi-rigide, un élément de rigidification d'axe principal longitudinal 4 formant une vertèbre disposée dans un logement 5 de l'élément de support 3, et un élément de couverture 6 fixé sur l'élément de support 3 par un moyen de maintien, par exemple par encliquetage ou clipsage. Ces éléments constitutifs présentent sensiblement la même longueur et lors de l'assemblage du balai d'essuie-glace 1, un capuchon embout 7 est fixé à chaque extrémité de celui-ci.

Dans l'exemple illustré, l'élément de couverture 6 constitue un accessoire qui comprend sur une partie de sa longueur une rampe de projection 8 d'un liquide de lavage. La rampe 8 est pourvue de trous de projection (non représentés). Cet accessoire comporte en outre un déflecteur aérodynamique 9 destiné à solliciter avec plus de vigueur la lame de raclage 2 contre une vitre de véhicule (non montrée). L'élément de couverture 6 peut également comprendre deux rampes de projection, une le long de chaque côté de l'élément de couverture 6.

L'élément de couverture 6 du balai d'essuie-glace 1 est en deux parties de sensiblement la même longueur et reliées l'une à l'autre par l'intermédiaire d'un connecteur mécanique 10 apte à recevoir un connecteur hydraulique 11 pour la distribution du liquide de lavage, ainsi qu'un connecteur électrique 12 relié à un élément chauffant 13 qui est incorporé sous la forme d'un film résistif dans le balai d'essuie-glace. Le connecteur électrique 12 est composé de deux parties : une partie intégrée au balai 1 et une partie intégrée au bras d'essuyage.

Le connecteur mécanique 10 est recouvert par une chape formant organe de liaison 14 le reliant à un bras d'actionnement 15 par une articulation (non représentée). Un dispositif d'essuyage est ainsi formé par le balai d'essuie-glace 1, ce bras d'actionnement 15, et un système d'entraînement en oscillation (non représenté) de celui-ci.

L'élément de support 3 comporte dans une zone centrale deux découpes latérales 16 disposées en regard l'une de l'autre. Ces découpes sont destinées à mettre en vis-à-vis et en contact les ergots et les encoches permettant la fixation du connecteur mécanique 10 sur le balai d'essuie-glace lors de son assemblage.

L'élément de rigidification formant vertèbre 4 est généralement en métal et pourra ci-dessous être désignée sous le terme raccourci de « vertèbre » (« spline » en anglais). Cet élément de rigidification joue un rôle essentiel dans ce balai d'essuie-glace puisqu'elle assure à l'ensemble du balai d'essuie-glace la rigidité requise pour une bonne tenue mécanique pour bien répartir la force d'appui du balai d'essuie-glace contre une vitre tout en restant suffisamment souple pour s'adapter à la forme de la surface de la vitre qui en général présente une forme bombée.

Lorsqu'on soulève ce balai d'essuie-glace souple, c'est-à-dire lorsque le balai n'est pas en contact avec la vitre, il prend une forme courbe de sorte que sa face inférieure soit concave et sa face supérieure par conséquent convexe.

Dans ce balai d'essuie-glace à dispositif chauffant, l'élément de rigidification 4 a en outre pour fonction d'acheminer et de répartir la chaleur en provenance de l'élément chauffant 13. Par conséquent, dans un balai d'essuie-glace à dispositif chauffant, il est important que l'élément de rigidification soit en un matériau bon conducteur de chaleur de manière à faire activement partie du dispositif chauffant.

L'élément chauffant 13 est dans la structure illustrée aux figures 3 et 4 sous forme d'un film résistif fixé sur la face inférieure de l'élément de rigidification 4 disposé dans le logement 5 de l'élément de support 3. Le logement 5 est ouvert vers le haut sur toute sa longueur par une large fente longitudinale 17 dans laquelle ce film résistif s'étend.

Cela donne les avantages d'une répartition et d'une distribution améliorée vers le bas de la chaleur émise par l'élément chauffant tout en mettant le connecteur électrique 12 à l'abri d'un rayonnement de chaleur direct qui pourrait provoquer une surchauffe du connecteur lors d'une utilisation prolongée.

L'élément chauffant 13 est avantageusement formé par un film résistif qui se trouve bien protégé dans le logement 5 prévu dans l'élément de support 3. Bien entendu, cela n'exclut pas l'utilisation de fils résistifs avec la même disposition à la place du film résistif.

Comme élément chauffant, il est également possible d'utiliser un revêtement résistif sous forme d'une peinture résistive ou autre revêtement déposé sur l'élément de rigidification 4.

Or, avec cet emplacement avantageux de l'élément chauffant 13, il y a un problème de connectivité au niveau de la liaison électrique entre l'élément chauffant 13 qui se trouve sous l'élément de rigidification 4, c'est-à-dire sur la face concave de l'élément de rigidification 4, et le connecteur électrique 12 qui se trouve au-dessus de celui-ci, c'est-à-dire en regard de la face convexe de l'élément de rigidification 4.

Ce problème de connectivité peut être résolu par l'agencement d'au moins une traversée 20 dans l'élément de rigidification 4 pour le passage des deux fils conducteurs 19, ou d'autres moyens de conduction électrique, reliant l'élément chauffant 13 au connecteur électrique 12, tel qu'illustré à la figure 4.

Cet agencement a toutefois pour inconvénient que la traversée 20 peut avoir un impact sur la répartition de la pression du balai, de par son dimensionnement dû au dimensionnel des fils, d'autant plus qu'une seule traversée 20 pourrait ne pas suffire de par l'encombrement des fils conducteurs 19 et le risque de court-circuit dû à la proximité des fils 19.

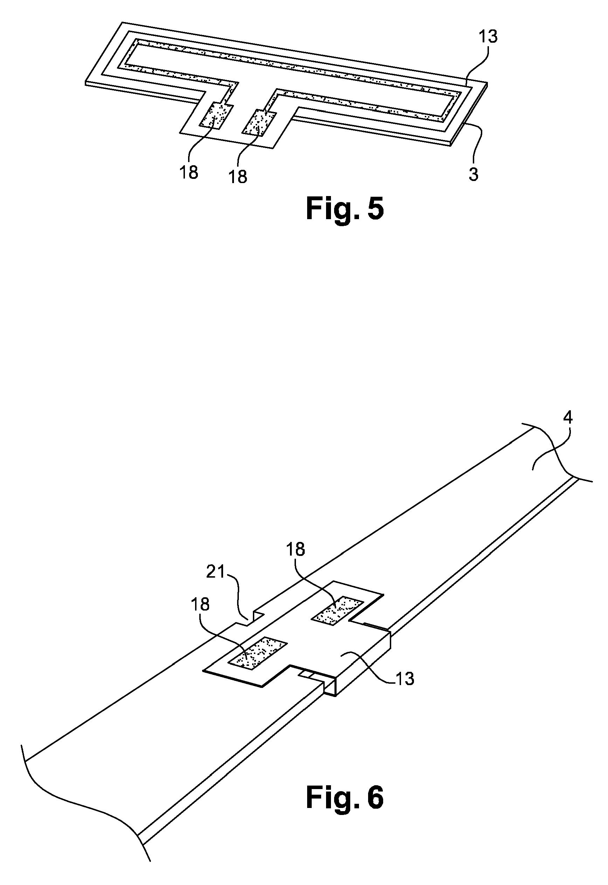

Une autre solution, telle qu'illustrée aux figures 5 et 6, consiste à utiliser un film chauffant 13 qui comprend une piste conductrice dont les deux extrémités présentent sensiblement la forme d'un pavé de contact 18, la partie du film chauffant 13 comprenant les deux pavés de contact 18 étant rabattue sur la face supérieure de l'élément de rigidification 4 pour assurer le contact avec le connecteur.

Cette solution a toutefois pour inconvénient que l'élément chauffant 13 peut être endommagé lors de l'insertion de l'élément de rigidification 4 dans le support 5. En outre, une seule encoche latérale 21 de maintien du connecteur peut être utilisée (figure 6).

US-A-2012/117746 montre le préambule de la revendication.

La présente invention vise à remédier à ces inconvénients.

Elle propose en particulier un dispositif chauffant qui minimise les risques de court-circuit et d'endommagement de l'élément chauffant.

L'invention a ainsi pour objet un dispositif chauffant apte à être assemblé à un élément de support d'un balai d'essuie-glace, le dispositif chauffant comprenant :
- au moins un l'élément de rigidification d'axe principal longitudinal, apte à être monté à l'intérieur d'un logement de l'élément de support,
- au moins un élément chauffant disposé sur l'élément de rigidification.

Dans le dispositif selon l'invention, l'élément de rigidification comprend au moins une traversée et chaque élément chauffant comprend une zone chauffante disposée sous l'élément de rigidification et une zone de connexion électrique disposée sur l'élément de rigidification, la zone de connexion électrique étant reliée à la zone chauffante via la ou les traversées.

La traversée présente dans l'élément de rigidification permet ainsi un passage central de chaque élément chauffant entre la face inférieure de l'élément de rigidification et la face supérieure de l'élément de rigidification, ce qui évite les inconvénients liés à un passage latéral de l'élément chauffant.

L'élément de rigidification peut comprendre deux encoches latérales aptes à maintenir mécaniquement l'élément de rigidification dans un connecteur mécanique du balai.

La zone de connexion électrique de chaque élément chauffant peut comprendre au moins deux éléments de connexion électrique.

Les éléments de connexion électrique peuvent être disposés de part et d'autre de l'axe longitudinal de l'élément de rigidification.

Le dispositif peut comprendre deux traversées disposées de part et d'autre de l'axe longitudinal de l'élément de rigidification.

Le dispositif peut comprendre deux traversées alignées le long de l'axe longitudinal de l'élément de rigidification.

Le dispositif peut comprendre deux éléments chauffant, chaque élément chauffant étant associé à une demi-longueur du balai.

Chaque traversée peut être située sensiblement dans la partie centrale de l'élément de rigidification, dans le sens longitudinal de celle-ci.

La zone chauffante peut s'étendre sur au moins la moitié de la largeur de l'élément de rigidification.

La zone chauffante peut s'étendre sur au moins la moitié de la longueur de l'élément de rigidification.

L'invention a également pour objet un balai d'essuie-glace.

Le balai d'essuie-glace selon l'invention comprend :
- un dispositif chauffant décrit ci-dessus,
- un élément de support, d'axe principal longitudinal, qui comporte :
   - un logement longitudinal,
   - des moyens de maintien d'une lame racleuse,
- une lame racleuse, et
- un connecteur mécanique apte à relier le balai d'essuie-glace à un bras d'actionnement d'un dispositif d'essuyage, le connecteur mécanique étant monté sur l'élément de rigidification.

Le connecteur mécanique peut comprendre un connecteur électrique auquel est reliée la zone de connexion électrique de chaque élément chauffant.

Le connecteur mécanique peut comprendre un connecteur hydraulique pour un liquide de lavage.

La traversée du dispositif chauffant est avantageusement située sous le connecteur mécanique.

D'autres caractéristiques et avantages de la présente invention apparaîtront plus clairement à la lecture de la description suivante donnée à titre d'exemple illustratif et non limitatif et faite en référence aux dessins annexés sur lesquels :
- les figures 1 à 6, déjà décrites, illustrent des balais d'essuie-glace de l'état de la technique,
- les figures 7 à 9 sont des vues en perspective d'un dispositif chauffant pour balai d'essuie-glace selon l'invention, conformément à un premier mode de réalisation,
- la figure 10 est une vue en perspective d'un dispositif chauffant selon l'invention, conformément à un deuxième mode de réalisation,
- la figure 11 est une vue en perspective d'un dispositif chauffant selon l'invention, conformément à un troisième mode de réalisation,
- la figure 12 est une vue en perspective d'un dispositif chauffant selon l'invention, conformément à un quatrième mode de réalisation,
- la figure 13 est une vue en perspective d'un dispositif chauffant selon l'invention, conformément à un cinquième mode de réalisation,
- la figure 14 est une vue en perspective d'un dispositif chauffant selon l'invention, conformément à un sixième mode de réalisation, et
- les figures 15 et 16 sont des vues en perspective d'un dispositif chauffant selon l'invention, conformément à une variante du sixième mode de réalisation.

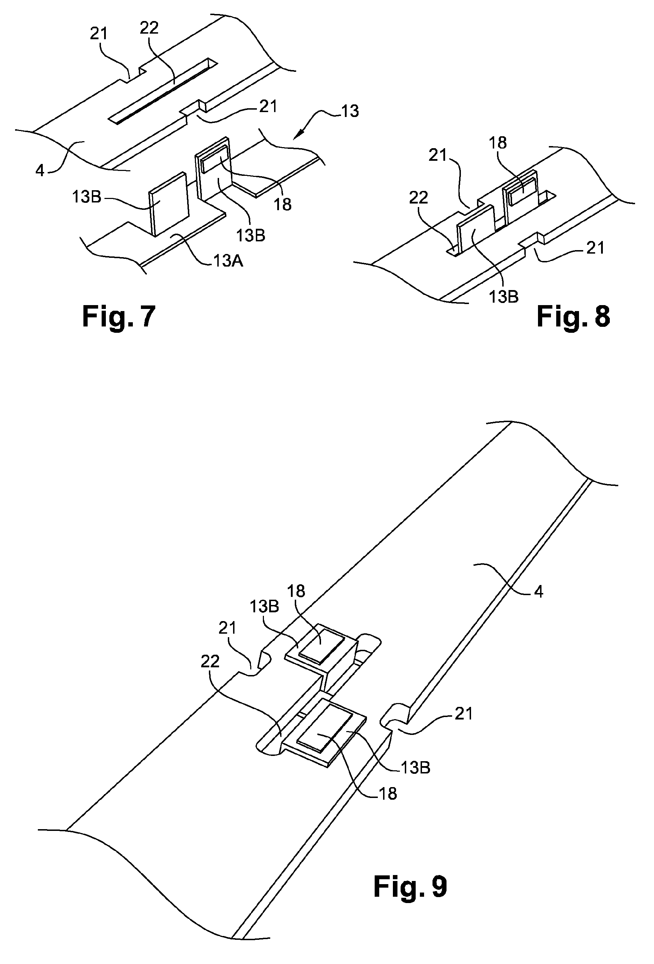

Tel qu'illustré à la figure 7, un dispositif chauffant pour balai d'essuie-glace selon l'invention selon l'invention comprend un élément de rigidification 4 muni d'au moins une traversée 22 (fente). L'élément de rigidification 4 comprend également deux encoches latérales 21, destinées à maintenir mécaniquement l'élément de rigidification 4 dans le connecteur central. Chaque encoche 21 peut par exemple être insérée dans une nervure du connecteur.

Dans ce premier mode de réalisation, l'élément de rigidification 4 comprend une unique fente 22. L'élément chauffant 13 comprend une surface chauffante 13A sous la forme d'un film chauffant, ainsi que deux éléments de connexion électrique 13B, typiquement un élément électrique 13B de signe « + » et un élément électrique 13B de signe « - », munis chacun d'un patin de contact 18 pour la connexion au connecteur électrique 12 (représenté à la figure 2). Les éléments de connexion électrique 13B sont reliés à la surface chauffante 13A par l'intermédiaire de la fente 22. Les éléments de connexion électrique 13B sont ainsi disposés sur l'élément de rigidification 4 en étant insérés dans la fente 22 (figure 8), puis repliés sur l'élément de rigidification 4 (figure 9).

Ainsi, le passage de la zone de connexion électrique, formée des éléments de connexion électrique 13B, à travers l'ouverture 22, permet d'éviter un passage latéral de la zone de connexion électrique, ce qui réduit les risques de court-circuit et d'endommagement de l'élément chauffant 13 et permet de pouvoir utiliser les deux encoches latérales 21.

Les éléments de connexion électrique 13B peuvent être repliés du même côté de la fente 22, ou de part et d'autre de la fente 22. Un pliage de part et d'autre de la fente 22 a pour avantage d'éloigner les éléments de connexion électrique 13B l'un de l'autre, et de limiter ainsi les risques de court-circuit et d'arc électrique. Les éléments de connexion 13B, une fois rabattus, peuvent être fixés à l'élément de rigidification 4 par collage ou par tout autre moyen de fixation adéquat.

La fente 22 est avantageusement disposée au milieu de l'élément de rigidification 4, ce qui confère de la souplesse à l'assemblage du connecteur mécanique.

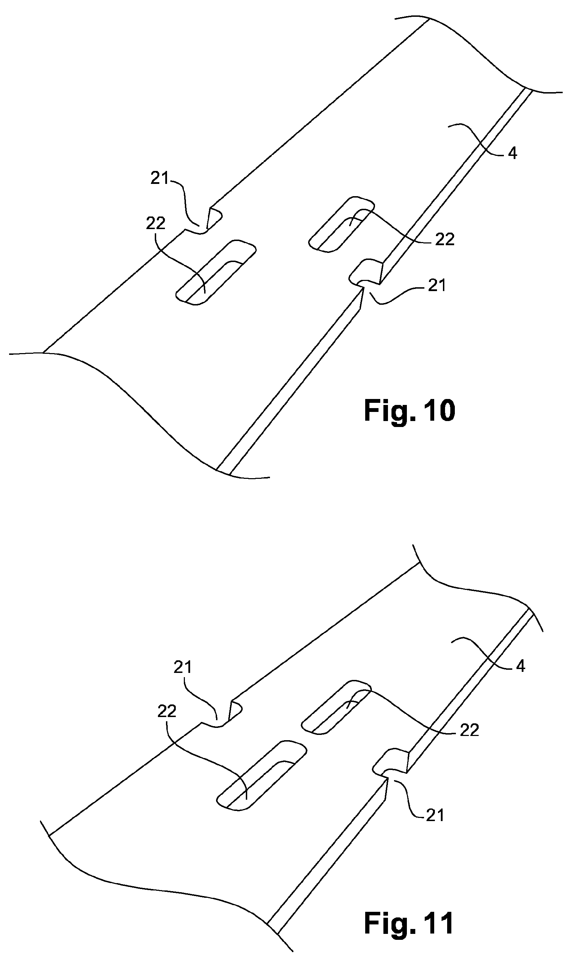

Dans un deuxième mode de réalisation, tel qu'illustré à la figure 10 sur laquelle l'élément chauffant n'a pas été représenté, l'élément de rigidification 4 comprend deux fentes 22, par exemple de longueur réduite par rapport à la fente unique du mode de réalisation illustré à la figure 9, et disposées en quinconce, de part et d'autre des deux encoches latérales 21 et de l'axe longitudinal de l'élément de rigidification 4, chaque fente 22 étant destinée à accueillir un élément de connexion électrique. Les éléments de connexion électrique peuvent être rabattus de part et d'autre des deux fentes 22. Cette structure a un impact réduit sur la répartition de la pression du balai.

Dans un troisième mode de réalisation, tel qu'illustré à la figure 11 sur laquelle l'élément chauffant n'a pas été représenté, l'élément de rigidification 4 comprend deux fentes 22 alignées, chaque fente 22 étant destinée à accueillir un élément de connexion électrique. Les éléments de connexion électrique peuvent être rabattus de part et d'autre des deux fentes 22. Cette structure a un impact réduit sur la répartition de la pression du balai.

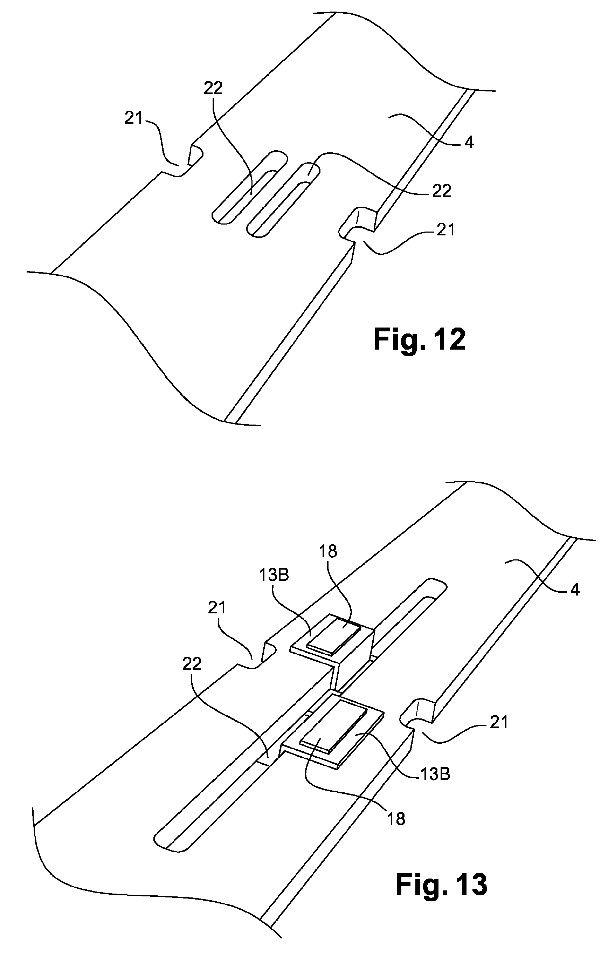

Dans un quatrième mode de réalisation, tel qu'illustré à la figure 12 sur laquelle l'élément chauffant n'a pas été représenté, l'élément de rigidification 4 comprend deux fentes 22 parallèles et en vis-à-vis, de part et d'autre de l'axe longitudinal de l'élément de rigidification, chaque fente 22 étant destinée à accueillir un élément de connexion électrique. Les éléments de connexion électrique peuvent être rabattus de part et d'autre des deux fentes 22. Cette structure a un impact réduit sur la répartition de la pression du balai.

Dans un cinquième mode de réalisation, tel qu'illustré à la figure 13, l'élément de rigidification 4 comprend une unique fente 22, de grande longueur, ce qui permet d'améliorer le procédé d'assemblage de par la souplesse de la partie centrale. Les éléments de connexion électrique 13B peuvent être repliés du même côté de la fente 22, ou de part et d'autre de la fente 22.

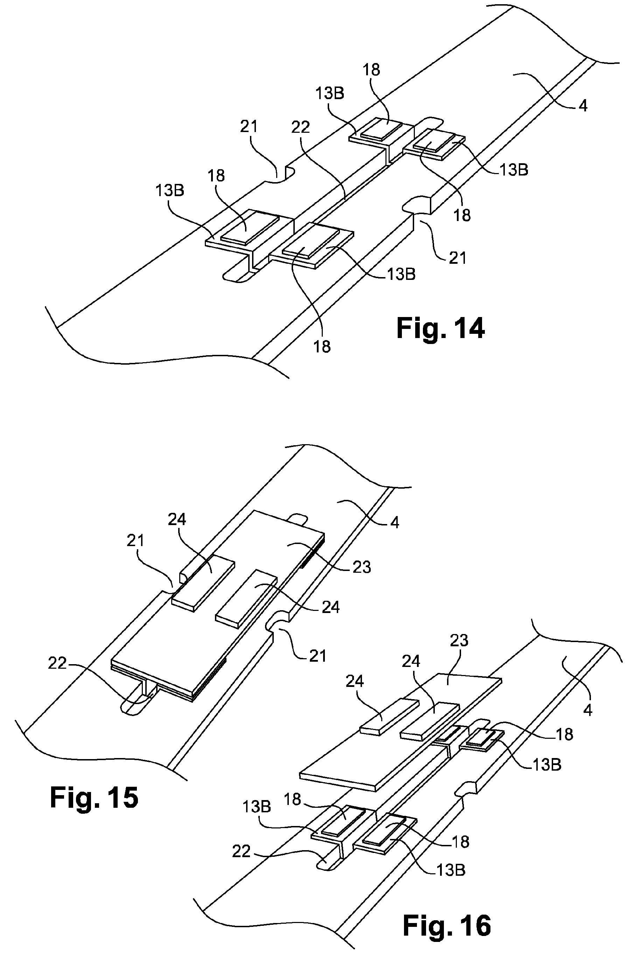

Dans un sixième mode de réalisation, tel qu'illustré à la figure 14, l'élément de rigidification 4 comprend une unique fente 22, de grande longueur, ce qui permet d'améliorer le procédé d'assemblage de par la souplesse de la partie centrale. Dans ce mode de réalisation, le dispositif chauffant comprend deux éléments chauffants 13, chaque élément chauffant 13 étant disposé sur une demi-longueur de balai, et sous l'élément de rigidification 4. Chaque élément chauffant est muni de deux éléments de connexion électrique 13B qui sont disposés sur la face supérieure de l'élément de rigidification 4, de la même manière que dans le premier mode de réalisation. Le chauffage est ainsi séparé en deux parties qui peuvent assurer le chauffage d'un demi-balai en cas de dysfonctionnement d'un dispositif chauffant.

Dans une variante du sixième mode de réalisation, tel qu'illustré aux figures 15 et 16, le dispositif comprend une pièce de connexion intermédiaire 23, munie sur sa face supérieure de deux contacts 24 destinés à être reliés au connecteur mécanique. La pièce de connexion intermédiaire 23 permet de n'avoir que deux contacts 24 issus de la zone de connexion du balai, pour se raccorder aux contacts électriques du connecteur mécanique.

## Revendications

1. Dispositif chauffant apte à être assemblé à un élément de support (3) d'un balai d'essuie-glace (1), le dispositif chauffant comprenant :
- au moins un élément de rigidification (4) d'axe principal longitudinal, apte à être monté à l'intérieur d'un logement (5) de l'élément de support (3),
- au moins un élément chauffant (13) disposé sur l'élément de rigidification (4),
**caractérisé en ce que** l'élément de rigidification (4) comprend au moins une traversée (22) et **en ce que** chaque élément chauffant (13) comprend une zone chauffante (13A) disposée sous l'élément de rigidification (4) et une zone de connexion électrique (13B) disposée sur l'élément de rigidification (4), la zone de connexion électrique (13B) étant reliée à la zone chauffante (13A) via la ou les traversées (22).

2. Dispositif chauffant selon la revendication 1, **caractérisé en ce que** l'élément de rigidification (4) comprend deux encoches latérales (21) aptes à maintenir mécaniquement l'élément de rigidification (4) dans un connecteur mécanique (10) du balai (1).

3. Dispositif chauffant selon la revendication 1, **caractérisé en ce que** la zone de connexion électrique (13B) de chaque élément chauffant (13) comprend au moins deux éléments de connexion électrique (13B).

4. Dispositif chauffant selon la revendication 3, **caractérisé en ce que** les éléments de connexion électrique (13B) sont disposés de part et d'autre de l'axe longitudinal de l'élément de rigidification (4).

5. Dispositif selon l'une des revendications 1 à 4, **caractérisé en ce qu'**il comprend deux traversées (22) disposées de part et d'autre de l'axe longitudinal de l'élément de rigidification (4).

6. Dispositif selon l'une des revendications 1 à 4, **caractérisé en ce qu'**il comprend deux traversées (22) alignées le long de l'axe longitudinal de l'élément de rigidification (4).

7. Dispositif selon l'une des revendications 1 à 6, **caractérisé en ce qu'**il comprend deux éléments chauffant (13), chaque élément chauffant (13) étant associé à une demi-longueur du balai (1).

8. Dispositif selon l'une des revendications 1 à 7, **caractérisé en ce que** chaque traversée (22) est située sensiblement dans la partie centrale de l'élément de rigidification (4), dans le sens longitudinal de celle-ci.

9. Dispositif chauffant selon l'une des revendications 1 à 8, **caractérisé en ce que** la zone chauffante (13A) s'étend sur au moins la moitié de la largeur de l'élément de rigidification (4).

10. Dispositif chauffant selon l'une des revendications 1 à 9, **caractérisé en ce que** la zone chauffante (13A) s'étend sur au moins la moitié de la longueur de l'élément de rigidification (4).

11. Balai d'essuie-glace (1), **caractérisé en ce qu'**il comprend :
• un dispositif chauffant selon l'une des revendications 1 à 10,
• un élément de support (3), d'axe principal longitudinal, qui comporte :
- un logement longitudinal (5),
- des moyens de maintien d'une lame racleuse,
• une lame racleuse (2), et
• un connecteur mécanique (10) apte à relier le balai d'essuie-glace (1) à un bras d'actionnement (15) d'un dispositif d'essuyage.

12. Balai d'essuie-glace (1) selon la revendication 11, **caractérisé en ce que** le connecteur mécanique (10) comprend un connecteur électrique (12) auquel est reliée la zone de connexion électrique (13B) de chaque élément chauffant (13).

13. Balai d'essuie-glace (1) selon la revendication 11 ou 12, **caractérisé en ce que** le connecteur mécanique (10) comprend un connecteur hydraulique (11) pour un liquide de lavage.

14. Balai d'essuie-glace (1) selon l'une des revendications 11 à 13, **caractérisé en ce que** la traversée (22) du dispositif chauffant est située sensiblement sous le connecteur mécanique (10).

## Patentansprüche

1. Heizvorrichtung, die geeignet ist, mit einem Tragelement (3) eines Scheibenwischerarms (1) verbunden zu werden, wobei die Heizvorrichtung umfasst:
- mindestens ein Versteifungselement (4) mit einer Hauptlängsachse, das geeignet ist, im Inneren einer Lagerung (5) des Tragelements (3) montiert zu werden,
- mindestens ein Heizelement (13), das auf dem Versteifungselement (4) angeordnet ist,
**dadurch gekennzeichnet, dass** das Versteifungselement (4) mindestens eine Verbindung (22) umfasst, und dass jedes Heizelement (13) eine Heizzone (13A), die unter dem Versteifungselement (4) angeordnet ist, und eine elektrische Anschlusszone (13B) umfasst, die auf dem Versteifungselement (4) angeordnet ist, wobei die elektrische Anschlusszone (13B) mit der Heizzone (13A) über die Verbindung(en) (22) verbunden ist.

2. Heizvorrichtung nach Anspruch 1, **dadurch gekennzeichnet, dass** das Versteifungselement (4) zwei seitliche Kerben (21) umfasst, die geeignet sind, das Versteifungselement (4) mechanisch in einem mechanischen Verbinder (10) des Wischerarms (1) zu halten.

3. Heizvorrichtung nach Anspruch 1, **dadurch gekennzeichnet, dass** die elektrische Anschlusszone (13B) jedes Heizelements (13) mindestens zwei elektrische Anschlusselemente (13B) umfasst.

4. Heizvorrichtung nach Anspruch 3, **dadurch gekennzeichnet, dass** die elektrischen Anschlusselemente (13B) beiderseits der Längsachse des Versteifungselements (4) angeordnet sind.

5. Vorrichtung nach einem der Ansprüche 1 bis 4, **dadurch gekennzeichnet, dass** sie zwei Verbindungen (22) umfasst, die beiderseits der Längsachse des Versteifungselements (4) angeordnet sind.

6. Vorrichtung nach einem der Ansprüche 1 bis 4, **dadurch gekennzeichnet, dass** sie zwei Verbindungen (22) umfasst, die entlang der Längsachse des Versteifungselements (4) ausgerichtet sind.

7. Vorrichtung nach einem der Ansprüche 1 bis 6, **dadurch gekennzeichnet, dass** sie zwei Heizelemente (13) umfasst, wobei jedes Heizelement (13) mit einer halben Länge des Wischerarms (1) verbunden ist.

8. Vorrichtung nach einem der Ansprüche 1 bis 7, **dadurch gekennzeichnet, dass** sich jede Verbindung (22) im Wesentlichen in dem zentralen Teil des Versteifungselements (4) in Längsrichtung desselben befindet.

9. Heizvorrichtung nach einem der Ansprüche 1 bis 8, **dadurch gekennzeichnet, dass** sich die Heizzone (13A) auf mindestens der Hälfte der Breite des Versteifungselements (4) erstreckt.

10. Heizvorrichtung nach einem der Ansprüche 1 bis 9, **dadurch gekennzeichnet, dass** sich die Heizzone (13A) auf mindestens der Hälfte der Länge des Versteifungselements (4) erstreckt.

11. Scheibenwischerarm (1), **dadurch gekennzeichnet, dass** er umfasst:
• eine Heizvorrichtung nach einem der Ansprüche 1 bis 10,
• ein Tragelement (3) mit einer Hauptlängsachse, umfassend:
- eine Längslagerung (5),
- Haltemittel eines Wischblattes,
• ein Wischblatt (2), und
• einen mechanischen Verbinder (10), der geeignet ist, den Scheibenwischerarm (1) mit einem Betätigungsarm (15) einer Wischvorrichtung zu verbinden.

12. Scheibenwischerarm (1) nach Anspruch 11, **dadurch gekennzeichnet, dass** der mechanische Verbinder (10) einen elektrischen Verbinder (12) umfasst, mit dem die elektrische Anschlusszone (13B) jedes Heizelements (13) verbunden ist.

13. Scheibenwischerarm (1) nach Anspruch 11 oder 12, **dadurch gekennzeichnet, dass** der mechanische Verbinder (10) einen hydraulischen Verbinder (11) für eine Waschflüssigkeit umfasst.

14. Scheibenwischerarm (1) nach einem der Ansprüche 11 bis 13, **dadurch gekennzeichnet, dass** die Verbindung (22) der Heizvorrichtung im Wesentlichen unter dem mechanischen Verbinder (10) angeordnet ist.

## Claims

1. Heater device adapted to be assembled to a support element (3) of a windscreen wiper (1), the heater device comprising:
- at least one stiffener element (4) with a longitudinal main axis, adapted to be mounted inside a housing (5) of the support element (3),
- at least one heater element (13) disposed on the stiffener element (4),
**characterized in that** the stiffener element (4) comprises at least one through-passage (22) and **in that** each heater element (13) comprises a heating zone (13A) disposed under the stiffener element (4) and an electrical connection zone (13B) disposed on the stiffener element (4), the electrical connection zone (13B) being connected to the heating zone (13A) via the through-passage or through-passages (22).

2. Heater device according to Claim 1, **characterized in that** the stiffener element (4) comprises two lateral notches (21) adapted to retain the stiffener element (4) mechanically in a mechanical connector (10) of the wiper (1).

3. Heater device according to Claim 1, **characterized in that** the electrical connection zone (13B) of each heater element (13) comprises at least two electrical connection elements (13B).

4. Heater device according to Claim 3, **characterized in that** the electrical connection elements (13B) are disposed on respective opposite sites of the longitudinal axis of the stiffener element (4).

5. Device according to any one of Claims 1 to 4, **characterized in that** it comprises two through-passages (22) disposed on respective opposite sides of the longitudinal axis of the stiffener element (4).

6. Device according to any one of Claims 1 to 4, **characterized in that** it comprises two through-passages (22) aligned along the longitudinal axis of the stiffener element (4).

7. Device according to any one of Claims 1 to 6, **characterized in that** it comprises two heater elements (13), each heater element (13) being associated with one half-length of the wiper (1).

8. Device according to any one of Claims 1 to 7, **characterized in that** each through-passage (22) is situated substantially in the central part of the stiffener element (4), in the longitudinal direction of the latter.

9. Heater device according to any one of Claims 1 to 8, **characterized in that** the heating zone (13A) extends over at least half the width of the stiffener element (4).

10. Heater device according to any one of Claims 1 to 9, **characterized in that** the heating zone (13A) extends over at least half the length of the stiffener element (4).

11. Windscreen wiper (1), **characterized in that** it comprises:
• a heater device according to any one of Claims 1 to 10,
• a support element (3) having a longitudinal main axis and that includes:
- a longitudinal housing (5),
- means for retaining a wiper blade,
• a wiper blade (2), and
• a mechanical connector (10) adapted to connect the windscreen wiper (1) to an actuator arm (15) of a wiper device.

12. Windscreen wiper (1) according to Claim 11, **characterized in that** the mechanical connector (10) comprises an electrical connector (12) to which the electrical connection zone (13B) of each heater element (13) is connected.

13. Windscreen wiper (1) according to Claim 11 or 12, **characterized in that** the mechanical connector (10) comprises a hydraulic connector (11) for a washer liquid.

14. Windscreen wiper (1) according to any one of Claims 11 to 13, **characterized in that** the through-passage (22) of the heater device is situated substantially under the mechanical connector (10).
